# EUROPÄISCHE PATENTSCHRIFT

(11) **EP 0 877 905 B1**
(45) Veröffentlichungstag und Bekanntmachung des Hinweises auf die Patenterteilung: **24.11.1999**
(21) Anmeldenummer: 97915265.9
(22) Anmeldetag: 24.01.1997
(51) Int. Cl.: F25B 41/06

(54) **KÄLTEMASCHINE UND VERFAHREN ZUR REGELUNG DES FÜLLUNGSGRADES EINES KÄLTEMITTELVERDAMPFERS**
REFRIGERATING MACHINE AND METHOD OF REGULATING THE FILLING LEVEL OF A REFRIGERANT EVAPORATOR
MACHINE FRIGORIFIQUE ET PROCEDE DE REGULATION DU NIVEAU DE REMPLISSAGE D'UN EVAPORATEUR A REFRIGERANT

(30) Priorität: 30.01.1996 DE 19603175
(43) Veröffentlichungstag der Anmeldung: 18.11.1998
(73) Patentinhaber: Buck, Wilhelm, 49356 Diepholz (DE)
(72) Erfinder: Buck, Wilhelm, 49356 Diepholz (DE)
(86) Internationale Anmeldenummer: DE9700136
(87) Internationale Veröffentlichungsnummer: WO9728407

(56) Entgegenhaltungen:
- EP-A- 0 580 344
- WO-A-93/11394
- WO-A-94/17346
- DE-A- 3 413 535
- DE-A- 4 006 040
- US-A- 4 571 951
- US-A- 5 301 514

## Beschreibung

Die Erfindung bezieht sich auf ein Verfahren zur Überwachung, Einstellung und Regelung des Füllungsgrades eines in einem geschlossenen Kreislauf einer Kältemaschine angeordneten und einen Kältemittel-Massenstrom zu einem im wesentlichen trokkenen Sauggas verdampfenden Kältemittelverdampfers gemäß dem Oberbegriff des Hauptanspruches und auf eine Kältemaschine zur Durchführung des Verfahrens.

Bei zu wenig geöffnetem Drosselventil wird der Verdampfer zu wenig mit Kältemittel gefüllt mit der Folge einer nur kleinen Kälteleistung. Bei zu weit geöffnetem Drosselventil wird der Verdampfer überflutet mit der Folge, daß die Strömung des Kältemittelfluids im Saugrohr schädliche Fluktuationen zeigt.

Es ist bekannt, daß die Überhitzung der Gasphase des Fluids im Saugrohr für die Verdampferfüllung verwendet werden kann. Diese Überhitzung ist nämlich kontravariant zur Kälteleistung des Verdampfers, d. h. je kleiner die Überhitzung gemacht wird, um so größer wird die Kälteleistung des Verdampfers. Dabei muß gewährleistet sein, daß die Strömung des Kältemittelfluids keine schädlichen Fluktuationen zeigt.

Die Verwendung der Überhitzung beinhaltet zwei gravierende Nachteile:
a) Die Überhitzung ist nur im Beharrungszustand anwendbar.
b) Die kleinste noch erlaubte Überhitzung ist von Anlage zu Anlage und von Betriebszustand zu Betriebszustand verschieden, und es gibt keine Möglichkeit, diesen Wert laufend im Betrieb zu bestimmen. Dabei darf die Überhitzung nicht zu klein gemacht werden, da sonst der Kältemittelmassenfluß im Saugrohr schädliche Fluktuationen zeigt und das Sauggas naß wird.

Aus der EP 0 613 545 B1 ist es bekannt, in einer dem Kältemittelverdampfer nachgeordneten Sauggasleitung einen beheizbaren Meßkörper einzusetzen, der von dem aus dem Kältemittelverdampfer stammenden Sauggas umspült wird. Der Meßkörper wird auf eine Temperatur aufgeheizt, die die des Sauggases ubersteigt. Das Auftreffen von Flüssigkeitstropfen des Kältemittels auf den Meßkörper und damit der Feuchtigkeitsgehalt des aus dem Kältemittelverdampfer stammenden Sauggases wird erfaßt, indem der zur Verdampfung der auf den Meßkörper auftreffenden Flüssigkeitstropfen erforderliche Energiebedarf gemessen bzw. ermittelt wird.

Nach Vorgabe eines Referenzgrenzwertes, der den gerade noch zulässigen Feuchtegehalt des Sauggases festlegt, wird durch eine geeignete Regelung der Feuchtegehalt im Sauggas begrenzt. Dieser Regelvorgang sorgt nicht für eine optimale Kälteleistung. Er stellt lediglich einen Schutz des Kompressors gegen Flüssigkeitsschläge dar.

Der Erfindung liegt nun die Aufgabe zugrunde, ein Verfahren zur Überwachung, Einstellung und Regelung der Verdampferfüllung mit dem Ziel eines optimalen Kältemittel-Massenstroms zu entwickeln. Dieses Verfahren soll unter allen Betriebsbedingungen anwendbar sein und für alle Kälteanlagen gelten. Dabei muß jedoch einschränkend berücksichtigt werden, daß der Massenstrom der Flüssigphase den erlaubten Grenzwert nie überscheitet.

Diese Aufgabe wird bei einem Verfahren nach dem Oberbegriff des Patentanspruchs 1 durch die im Anspruch 1 gekennzeichnete Erfindung gelöst.

Eine Kältemaschine zur Durchführung des Verfahrens wird im Anspruch 13 definiert.

Weiterbildungen des Verfahrens und Weiterbildungen der Einrichtung sind in den Unteransprüchen 2 bis 12 bzw. 14 und 15 beschrieben.

Die Erfindung basiert also auf der Erkenntnis, daß die Strömung des Kältemittelfluids im Saugrohr regellose Kurzzeitschwingungen aufweist, deren Amplitude mit Erhöhung der Kältemittelzufuhr zum Verdampfer stetig wächst und in der Nähe eines besonderen Punktes, der z.B. bei einem luftgekühlten Verdampfer von der Feuchte und der Temperatur der in den Verdampfer eintretenden Luft abhängt, extrem stark ansteigt. Die Quantifizierung der Amplituden der regellosen Kurzzeitschwingungen, mittels Spannen oder mittels der Abweichungen der Meßwerte von einer Bezugslinie, aus denen dann ein Fluktuationsmaß ermittelt wird, welches zur Bestimmung von Kennlinien und einer Sollfunktion zu Regelzwecken benutzt wird, ist wesentliches Merkmal der vorliegenden Erfindung.

Die mit der Erfindung erzielten Vorteile bestenen insbesondere darin, daß ein besonderer Effekt - nämlich regellose Kurzzeitschwingungen des Kältemittelfluids im Saugrohr - genutzt wird, der sowohl im Beharrungszustand wie in Übergangszeiten vorhanden ist, und daß aus diesem Effekt ein Fluktuationsmaß gewonnen werden kann, das ein Maß für die Füllung des Verdampfers darstellt. Diese Technik ist auch dann anwendbar, wenn die Überhitzung zu völlig falschen Ergebnissen führt.

Im folgenden wird die Erfindung anhand von Ausführungsbeispielen unter Bezug auf die Zeichnungen näher erläutert.

Die Zeichnungen zeigen dabei in
- Fig. 1: eine Prinzipdarstellung einer Kältemaschine, in der die erfindungsgemäße Einrichtung und das erfindungsgemäße Verfahren zur Einstellung, Regelung und Überwachung des Füllungsgrades eines Kältemittelverdampfers eingesetzt wird,
- Fig. 2: die regellosen Kurzzeitschwingungen eines gemittelten Meßsignals eines Heißfilm-Anemometers bei konstanter Temperaturdifferenz als Funktion der Zeit,
- Fig. 3: die regellosen Kurzzeitschwingungen eines gemittelten Meßsignals eines Heißfilm-Anemometers für einen kurzen Zeitraum mit eingezeichneten Spannen S1 ... S11 und
- Fig.4: eine Kennlinie und eine Sollfunktion für die Regelung als Funktion der Bezugsgröße, in diesem Falle der strömungstechnischen Kenngröße des Ventils Cv.

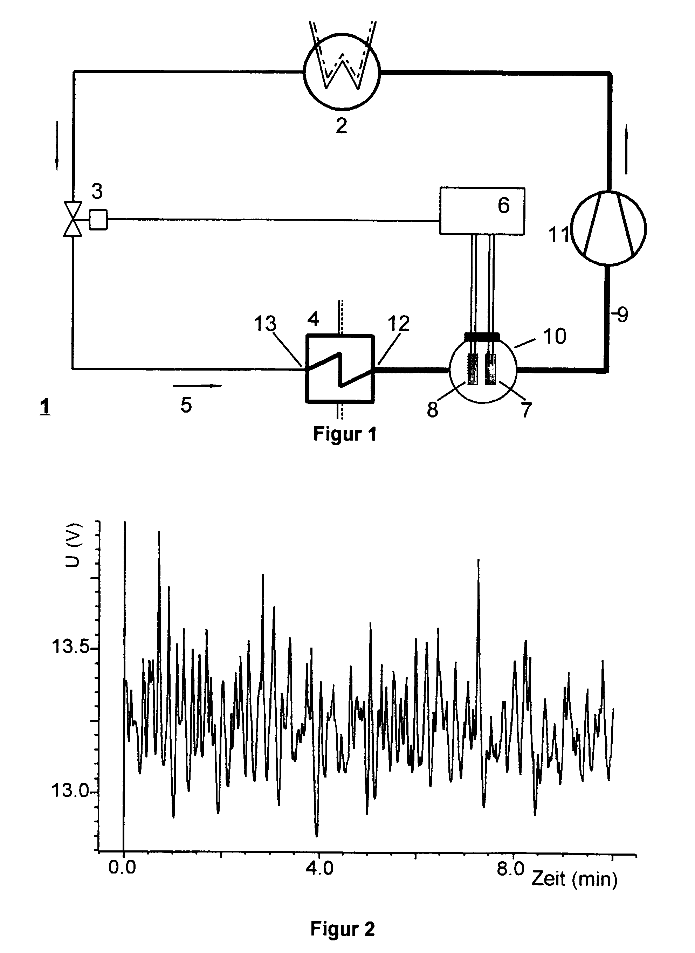

In Fig. 1 ist eine Kältemaschine 1 dargestellt, in der sich ein Kältemittelverdampfer 4, ein Kompressor 11, ein Kondensator 2 und ein Drosselventil 3 befindet. Der Kältemittel-Massenstrom 5 durchläuft einen Kreislauf zwischen einem im Kältemittelverdampfer 4 wirksamen niedrigen Druck und einem im Kondensator 2 wirksamen hohen Druck. Ein Kompressor 11 saugt am Ausgang 12 des Kältemittelverdampfers 4 den zu einem sogenannten Sauggas verdampfenden Kältemittel-Massenstrom 5 ab. Das Sauggas sollte am Eingang zum Kompressor 1 1 im wesentlichen flüssigkeitsfrei sein und frei von größeren Fluktuationen strömen. Durch die Wirkung des Kompressors 11 wird der am Ausgang 12 des Kältemittelverdampfers 4 abgesaugte Dampf bzw. das Sauggas zu hohem Druck komprimiert und im Kondensator 2 in einen im wesentlichen flüssigen Kältemittel-Massenstrom 5 hohen Drucks kondensiert, also verflüssigt.

Um dem Kältemittelverdampfer 4 den Kältemittel-Masssenstrom 5 mit dem für die Verdampfung erniedrigten Druck zuführen zu konnen, ist in die Zuleitung zum Eingang 13 des Kältemittelverdampfers 4 ein Drosselventil 3 eingebaut. Dieses Drosselventil 3 kann eine bekannte Konstruktion für ein regelbares Ventil haben, mit dem die Größe des Kältemittel-Massenstromes 5 so eingestellt wird, daß der Kältemittelverdampfer 4 weder übernoch unterfüllt wird und der Kältemittel-Massenstrom 5 seine optimale Größe für die jeweilige Kälteanlage und den jeweiligen Betriebszustand annimmt. Das Drosselventil 3 kann z. B. ein thermostatisches Expansionsventil oder ein Kapillarrohr oder ein Regelventil mit elektrischem Antrieb sein. Hierzu gehort auch ein Magnetventil, dessen Öffnungs- und/oder Schließzeiten laufend verandert, d. h. angepaßt werden kann.

Zur Ermittlung der optimalen Kälteleistung des Verdampfers 4 ist in die Leitung 9 zwischen Kältemittelverdampfer 4 und Kompressor 11 ein Heißfilm-Anemometer 10 eingebaut. Dieses Anemometer 10 umfaßt einen beheizbaren Meßwiderstand 7 und einen nicht beheizten Temperaturfühler 8. Das Anemometer 10 ist in den Innenraum der Leitung 9 eingefügt, und zwar wärmeisoliert und vakuum- und druckdicht gegen die ortsfesten Teile seiner Umgebung. Das Anemometer 10 ist zur besseren Kenntlichmachung in Leitung 9 in Fig. 1 im Querschnitt und vergrößert dargestellt.

Der beheizbare Meßwiderstand 7 wird so weit aufgeheizt, daß seine Temperatur zeitkonstant, z. B. 30 K über der Sauggastemperatur liegt, die durch den Meßwiderstand 8 erfaßt wird.

Der Meß- und Regelvorgang der beschriebenen Vorrichtung läuft dann wie folgt ab:

Die Temperatur des beheizbaren Meßkörpers 7 wird ununterbrochen auf eine Temperatur geheizt, die zeitkonstant 30 K oberhalb der vom Meßwiderstand 8 gemessenen Temperatur des Sauggases liegt. Um dies zu erreichen, muß die Heizspannung laufend angepaßt werden. Diese Heizspannung stellt in diesem Beispiel das Meßsignal dar.

Alternativ kann auch - bei konstant gehaltener Übertemperatur des beheizbaren Meßkörpers 7 - der Heizstrom bei konstanter Spannung oder allgemein die Heizleistung laufend angepaßt und als Meßsignal verwendet werden.

Bei einer anderen Art, das thermische Anemometer 10 zu betreiben, wird dem beheizten Meßkörper 7 eine konstante Heizleistung zugeführt und die Temperatur des beheizten Meßwiderstandes 7 als Meßsignal verwendet.

Das thermische Anemometer 10 reagiert auf die unterschiedlichen Durchflußmengen des Massestromes im Saugrohr 9.

Um die regellosen Kurzzeitschwingungen der Strömung des Kältemittelfluides im Saugrohr 9 untersuchen zu können, wird aus dem Meßsignal des thermischen Anemometers 10 ein Meßwert ermittelt, der als Funktion der Zeit ausschließlich die regellosen Kurzzeitschwingungen darstellt. Das Meßsignal, das Nutzsignal, der Meßwert und der Nutz-Meßwert werden nachfolgend abkürzend und zusammenfassend "Meßwert" genannt. Dagegen sollen störende Effekte, die bei hoher zeitlicher Auflösung zu beobachten sind, durch geeignete Maßnahmen eliminiert werden. Zu diesem Zweck kann einmal die Zeitkonstante des thermischen Anemometers 10 so eingerichtet werden, daß bereits das Meßsignal keine störenden Effekte enthält. Alternativ kann ein thermisches Anemometer 10 mit hoher zeitlicher Auflösung angewendet werden. In diesem Fall kann das Meßsignal störende Effekte enthalten. Um diese zu eliminieren wird deshalb das Meßsignal durch ein anschließendes elektronisches oder digitales Verfahren so bearbeitet werden, daß der endgültige Meßwert störende Effekte nicht mehr enthält.

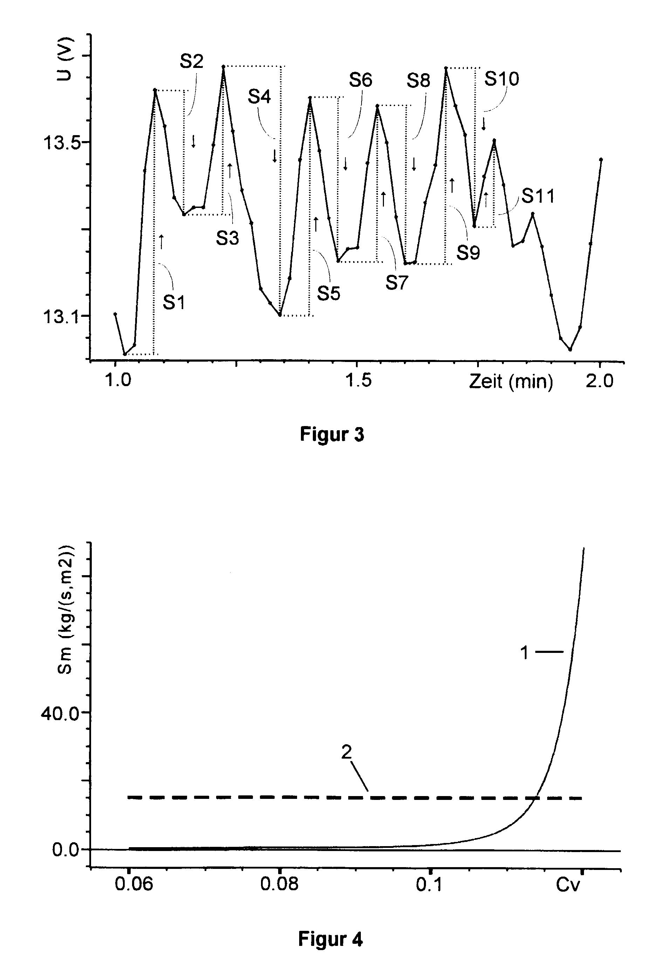

Zur Bestimmung von Kennlinien für den Fluktuationswert - siehe Kurve 1 in Fig. 4 - wird wie folgt verfahren:

Nachdem für jeden Öffnungszustand des Drosselventiles jeweils hinreichend viele dieser Meßwerte bestimmt sind, werden für diese die Spannen der regellosen Kurzzeitschwingungen ermittelt und danach aus einer Anzahl von Spannen in einem besonderen Verfahren ein Fluktuationsmaß bestimmt. Einfaches Beispiel für ein solches Fluktuationsmaß ist ein Mittelwert der Spannen.

Für die Meßwerte, aus denen zuerst die Spannen und anschließend der Fluktuationswert ermittelt wurde, wird dann auch noch die Bezugsgröße bestimmt. In Fig 4 stellt die strömungstechnische Kenngröße des Ventiles Cᵥ diese Bezugsgröße dar.

Zur Durchführung eines Regelungs- oder Überwachungsvorganges wird laufend für die letzten, z.B. 40 Meßwerte ein Fluktuationswert bestimmt, der zur Erzielung der optimalen Kälteleistung einem Sollwert gegenüber gestellt wird. Dieser Sollwert wird so definiert, daß die Kälteleistung möglichst groß wird, aber die regellosen Schwingungen trotzdem noch eine Regelung der Verdampferfüllung mit Kältemittel erlaubt. Zur Bestimmung der optimalen Kälteleistung wird die Regelgröße einem Sollwert gegenübergestellt. Dieser Sollwert ist eine Funktion der Bezugsgröße. Er wird so definiert, daß die Kälteleistung möglichst groß wird, aber die regellosen Schwingungen trotzdem noch eine Regelung erlauben.

Die in Fig. 2 gezeigten Meßwerte wurden wie folgt ermittelt. Mit einer Abtastzeit von 8.3 ms wurden jeweils 256 Werte erfaßt und ihr Mittelwert berechnet. Dieser Mitteiwert stellt den endgültigen Meßwert dar.

Fig. 3 stellt einen Ausschnitt von Fig. 2 dar, Fig. 3 zeigt, wie gemäß DIN 45667 aus den in einer Minute erfaßten regellosen Kurzzeitschwingungen die Spannen S1 ... S11 ermittelt werden. Dabei werden die Spannen zwischen einem Minimum und dem nachfolgenden Maximum positiv (S1, S3, S5, S7, S9, S11) und diejenigen zwischen einem Maximum und dem nachfolgenden Minimum negativ (S2, S4, S6, S8, S10) gezählt. Bei einer Abwandlung dieses Verfahrens werden alle Spannen positiv (oder negativ) gezählt. Aus einer Anzahl von Spannen wird dann ein Fluktuationsmaß ermittelt. Fluktuationsmaß kann z.B. der Mittelwert der Spannen oder das Maximum der Spannen oder eine andere Größe sein. die aus den ermittelten Spannen gewonnen wird. Um den Einfluß von kleinen Spannen auszuschließen, kann eine Hysterese eingeführt werden.

In Fig. 4 wird als endgültiger Meßwert die Massenstromdichte G_{g} der Gasphase im Saugrohr 9 benutzt. Zur Bestimmung der gezeigten Kennlinie wird als Fluktuationsmaß der Mittelwert Sₘ der Spannen der regellosen Kurzzeitschwingungen der Massenstromdichte G_{g} der Gasphase benutzt. Bezugsgröße ist hier die strömungstechnische Kenngroße des Expansionsventils Cᵥ. Alle Spannen werden positiv gezählt. Die gezeigte Kennlinie 1 wurde durch eine Ausgleichsrechnung aus den Meßwerten Sₘ als Funktion von Cᵥ, bestimmt. Der zu Sₘ gehörende Mittelwert von G_{g}, d.h. G_{g,m}, könnte ebenfalls als Bezugsgröße verwendet werden.

Sollwertkurve für den Fluktuationswert kann z. B. die Funktion Sₛₒₗₗ=a0+a1*X+a2*x2 sein. Dabei ist x die Bezugsgröße. In Fig. 4 - siehe Kurve 2 - stellt Sₛₒₗₗ=15,0 kg/(s,m²) die Sollwertkurve dar, Bezugsgröße ist Cᵥ.

Da die Regelgröße nur für eine kleine Anzahl der zurückliegenden Meßwerte bestimmt wird, schwankt sie innerhalb eines Konfidenzintervalls um die Sollwertkurve 2 in Fig. 4.

Bei einem zu kleinen Fluktuationswert ist der Verdampfer unterfüllt. Die Kältemittelzufuhr muß dann erhöht werden. Sobald der Fluktuationswert größer ist als erlaubt, ist die Kältemittelzufuhr zum Verdampfer zu drosseln.

Zur Abgrenzung der hier beschriebenen Technik wird darauf hingewiesen, daß die Autokorrelationsfunktion der hier benutzten Meßergebnisse beweisen, daß die untersuchten Schwingungen regellos, d. h. ohne periodische Anteile sind.

Bei Verwendung von thermostatischen oder elektrisch angetriebenen Expansionsventilen wird oft ein sogenannter "Hunting-Effekt" beobachtet. In einem solchen Fall zeigt die Strömung des Sauggasfluids ebenfalls Schwingungen. Die Anwendung der Autokorrelationstechnik zeigt jedoch, daß es sich hier um periodische und keineswegs um regellose Schwingungen handelt.

## Patentansprüche

1. Verfahren zur Überwachung, Einstellung und Regelung des Füllungsgrades eines in einem geschlossenen Kreislauf einer Kältemaschine (1) angeordneten und einen Kältemittel-Massenstrom (5) zu einem im wesentlichen ohne störende Fluktuationen strömenden Sauggas verdampfenden Kältemittelverdampfers (4) unter Verwendung eines Drosselventils (3) und eines in die Saugleitung (9) eingebauten Meßgerätes, wobei das ermittelte Meßsignal durch Anwendung analoger und/oder digitaler Verfahren von störenden Anteilen befreit und so ein Nutzsignal und/oder ein Nutzmeßwert erzeugt wird, dadurch gekennzeichnet, daß unter Anwendung des Nutzsignals und/oder Nutzmeßwertes eines Durchflußmessers die Fluktuation der Strömung des Kältemittelfluides (5) in der Saugleitung (9) hinsichtlich regelloser Kurzzeitschwingungen untersucht wird und aus diesen regellosen Kurzzeitschwingungen ein Fluktuationsmaß abgeleitet wird, welches ein Maß für die Größe der regellosen Kurzzeitschwingungen darstellt, welches zugleich zur Regelung benutzt wird und welches zur Beurteilung der Güte der Verdampferfüllung einem Sollwert gegenübergestellt wird, wobei ein zu kleines Fluktuationsmaß eine Unterfüllung des Verdampfers (4) anzeigt und eine Erhöhung der Kältemittelzufuhr zum Verdampfer erfordert, während ein zu großes Fluktuationsmaß eine Überfüllung bedeutet und eine Verringerung der Kältemittelzufuhr zum Verdampfer(4) erfordert.

2. Verfahren nach Anspruch 1, dadurch gekennzeichnet, daß als Durchflußmesser ein thermisches Anemometer eingesetzt wird.

3. Verfahren nach Anspruch 1 oder 2, dadurch gekennzeichnet, daß als Kenngröße der regellosen Kurzzeitschwingungen der Strömung des Kältemittelfluids zur Bestimmung eines Fluktuationsmaßes die Spannen der regellosen Schwingungen dienen, die mit positiven und negativen Werten gezählt werden.

4. Verfahren nach Anspruch 3, dadurch gekennzeichnet, daß nicht zwischen positiven und negativen Werten unterschieden wird.

5. Verfahren nach einem der vorhergehenden Ansprüche, dadurch gekennzeichnet, daß bei der Ermittlung der Spannen der regellosen Kurzzeitschwingungen des Kältemittelfluids eine Hysterese eingeführt wird, um kleine Spannenwerte auszuschließen.

6. Verfahren nach Anspruch 1 oder 2, dadurch gekennzeichnet, daß als Kenngröße der regellosen Kurzzeitschwingungen der Strömung des Kältemittelfluids zur Bestimmung eines Fluktuationsmaßes die Abweichungen des Nutzsignals und/oder Nutz-Meßwertes von einer Bezugsfunktion, die zeitlich veränderlich sein kann, verwendet wird.

7. Verfahren nach Anspruch 6, dadurch gekennzeichnet, daß die Bezugsfunktion aus den Minima des Nutzsignals und/oder des Nutz-Meßwertes, die jeweils für Zeitintervalle geeigneter Länge bestimmt werden, ermittelt wird.

8. Verfahren nach Anspruch 6, dadurch gekennzeichnet, daß die Bezugsfunktion aus den Mittelwerten des Nutzsignals und/oder des Nutz-Meßwertes, die jeweils für Zeitintervalle geeigneter Länge bestimmt werden, ermittelt wird.

9. Verfahren nach einem oder mehreren der vorgenannten Ansprüche, dadurch gekennzeichnet, daß aus den Kennwerten durch Mittelwertbildung oder eine andere Rechenvorschrift ein Fluktuationsmaß ermittelt wird.

10. Verfahren nach einem oder mehreren der vorgenannten Ansprüche, dadurch gekennzeichnet, daß der Mittelwert der Nutz-Meßwerte oder ein anderer Wert, der eine Funktion der Nutz-Meßwerte ist, als Bezugsgröße ermittelt wird, das Fluktuationsmaß eine Funktion dieser Beurteilungsgröße ist und die Bezugsgröße zur Beurteilung der Verdampferfüllung benutzt wird.

11. Verfahren nach einem oder mehreren der vorgenannten Ansprüche, dadurch gekennzeichnet, daß der Sollwert und ein dazugehöriges Toleranzband für das Fluktuationsmaß experimentell ermittelt und durch Näherungsfunktionen dargestellt werden, deren Variable - hier auch Bezugsgröße genannt - z.B. die strömungstechnische Kenngröße des Expansionsventils ist.

12. Verfahren nach Anspruch 1 bis 8 und Anspruch 10, dadurch gekennzeichnet, daß aus dem Meßsignal des Durchflußmessers (10) als Nutz-Meßgröße die Massenstromdichte der Gasphase des Kältemittelfluids in der Saugleitung (9) bestimmt und für die weiteren Untersuchungen verwendet wird.

13. Kältemaschine mit einer Messvorrichtung zur Erfassung von Kurzzeitschwingungen der Strömung des Kältemittelfluids (5) in der Saugleitung zur Regelung des Füllungsgrades des Verdampfers der Kältemaschine mit einem geschlossenen Kreislauf für das Kältemittel, der einen Kompressor (11) für die Verdichtung des Kältemittels in einem Kondensator (2) zu einem Kältemitelmassenstrom hohen Drucks, ein Drosselventil (3) zur Anpassung und Zuführung des Kältemittelmassenstroms reduzierten Drucks zu einem Kältemittelverdampfer (4) und eine Rohrleitung (9) zwischen dem Ausgang des Kältemittelverdampfers (4) und dem Kompressor (11) zum Ansaugen des Sauggases durch den Kompressor (11) enthält, wobei ein thermisches Anemometer (10) in der Strömung des Fluids der Saugleitung (9) angeordnet ist und das Anemometer (10) einen beheizten Meßwiderstand (7) und einen nicht beheizten, die Sauggastemperatur erfaßenden Sensor (8) aufweist.

14. Einrichtung nach Anspruch 13, dadurch gekennzeichnet, daß das thermische Anemometer aus einem beheizten Messwiderstand (7) mit zeitkonstanter Übertemperatur und einem nicht beheizten Temperaturfühler (8) besteht.

15. Einrichtung nach Anspruch 13, dadurch gekennzeichnet, daß das thermische Anemometer aus einem mit konstanter elektrischer Leistung beheizten Messwiderstand (7) und einem nicht beheizten Temperaturfühler (8) besteht.

## Claims

1. A method of monitoring, adjusting and controlling the degree of filling of a refrigerant evaporator (4), that is installed in a closed circuit of a refrigerating machine (1) and that evaporates a refrigerant mass velocity (5) to a suction line gas without detrimental fluctuations applying a throttle valve (3) and a measuring device built into the suction line (9), the obtained measurement signal being freed from interfering portions by the use of analog and/or digital processes so that a usable signal and/or a usable measured value is generated, characterized in that by the use of the usable signal and/or the usable measured value of a flowmeter, the fluctuations of the flow of the refrigerant fluid (5) in the suction line (9) are examined with respect to random short-time oscillations and from these short-time oscillations, a fluctuation measure is obtained, which is a measure of the magnitude of the random short-time oscillations, that is at the same time used for control purposes and which represents an assessment of the quality of the evaporator filling by comparison to a setpoint, where an insufficient fluctuation measure indicates an underfilling of the evaporator (4) and a requirement for an increase in the refrigerant supply to the evaporator, while an excessive fluctuation measure signifies an overfilling and requires a reduction of the refrigerant feed to the evaporator (4).

2. A method according to claim 1, characterized in that a thermal anemometer is used as the flow meter.

3. A method according to claim 1 or 2, characterized in that the range values of the random oscillations, which are used as the characteristic values of the random short-time oscillations of the flow of the refrigerant fluid for determining a fluctuation measure, are counted with positive and negative values.

4. A method according to claim 3, characterized in that no distinction is made between positive and negative values.

5. A method according to one of the preceding claims, characterized in that determining the range values of the random short-time oscillations of the flow of the refrigerant fluid a hysteresis is introduced to exclude small range values.

6. A method according to claim 1 or 2 , characterized in that the deviation of the usable signal and/or usable measured value from a reference function which can vary with time is used as the characteristic value of the random short-time oscillations of the flow of the refrigerant fluid for determining a fluctuation measure.

7. A method according to claim 6, characterized in that the reference function is determined from the minima of the usable signal and/or the usable measured value which is determined for time intervals of suitable length.

8. A method according to claim 6, characterized in that the reference function is obtained from the average values of the usable signal and/or the usable measured value which is determined for time intervals of suitable length.

9. A method according to one or more of the preceding claims, characterized in that a fluctuation measure is obtained from the characteristic value by applying an averaging or another calculation procedure.

10. A method according to one or more of the preceding claims, characterised in that the average value of the usable measured value or another value which is a function of the usable measured value is determined as a reference parameter, the measure of fluctuation is a function of this reference parameter and the reference parameter is used for the assessment of the evaporator filling.

11. A method according to one or more of the previous claims, characterized in that the setpoint and the appropriate tolerance band for the fluctuation measurement is determined experimentally and represented by an approximation function whose variable, also termed the reference parameter, is for example the flow coefficient of the expansion valve.

12. A method according to claims 1 - 8 and claim 10, characterized in that from the measurement signal of the flow meter (10) the mass velocity of the gas phase of the refrigerant fluid in the suction line (9) is determined as the usable measurement value and is used for further determinations.

13. A refrigerating machine with a measuring unit for determining short-time oscillations of the flow of the refrigerant fluid (5) in the suction line for controlling the degree of filling of the refrigerant evaporator of the refrigerating machine in a closed circuit for the refrigerant which includes a compressor (11) for the compression of the refrigerant in a condenser (2) to a refrigerant mass velocity of high pressure, a throttle valve (3) for adapting and supplying the refrigerant mass velocity at a reduced pressure to an refrigerant evaporator (4) and a line (9) between the outlet of the refrigerant evaporator (4) and the compressor (11) for sucking the suction gas by the compressor (11), characterized in that a thermal anemometer (10) is inserted in the flow of the fluid of the suction line (9) and the anemometer (10) consists of a heated resistance temperature detector (7) and a not heated sensor (8) which measures the temperature of the suction line gas.

14. The device according to claim 13, characterized in that the thermal anemometer consists of a heated resistance temperature detector (7) with a constant overheating-temperature and a not heated temperature sensor (8).

15. The device according to claim 13, characterized in that the thermal anemometer consists of a resistance temperature detector (7) which is supplied with a constant electrical power, and a not heated temperature detector (8).

## Revendications

1. Procédé de surveillance, d'ajustage et de réglage du degré de remplissage d'un évaporateur à frigorigène (4), placé dans le circuit fermé d'une machine frigorifique (1) et dans l'écoulement de la masse frigorigène (5), par l'évaporation d'un gaz pauvre passant essentiellement sans fluctuations gênantes en se servant notamment d'une soupape d'étranglement (3) et d'un appareil de mesure intégré à une conduite d'aspiration (9), en sachant que le signal induit par la mesure sera exempt de perturbations par l'utilisation d'un procédé analogique et/ou numérique et qu'il générera ainsi un signal utile et/ou une valeur de mesure utile, caractérisé de manière à ce que l'utilisation du signal utile et/ou de la valeur de mesure utile d'un débitmètre examine la fluctuation d'écoulement du frigorigène (5) dans la conduite d'aspiration (9) afin de détecter des oscillations irrégulières de courte durée et de constater un taux de fluctuation basé sur les oscillations irrégulières de courte durée enregistrées et pouvant ainsi constitué un taux de mesure quant à l'importance des oscillations irrégulières de courte durée ; ce taux sert simultanément au réglage et il est comparé à une valeur de référence d'appréciation de la qualité du remplissage de l'évaporateur, en sachant également qu'un taux de fluctuation trop bas signale un remplissage insuffisant de l'évaporateur (4), impliquant ainsi une augmentation de l'alimentation en frigorigène de l'évaporateur, tandis qu'un taux de fluctuation trop élevé signale un trop-plein impliquant alors une réduction de l'alimentation en frigorigène de l'évaporateur (4).

2. Procédé selon spécification 1 caractérisé de manière à ce qu'on se sert d'un anémomètre thermique en qualité de débitmètre.

3. Procédé selon spécification 1 ou 2 caractérisé de manière à ce que les divergences des oscillations irrégulières servent de paramètres aux oscillations irrégulières de courte durée de l'écoulement du frigorigène pour la détermination d'un taux de fluctuation en sachant que les oscillations irrégulières sont comptées en valeurs positives et négatives.

4. Procédé selon spécification 3 caractérisé de manière à ne pas différencier entre les valeurs positives et négatives.

5. Procédé selon une des spécifications ci-dessus caractérisé de manière à introduire une hystérèse lors de la détermination des divergences des oscillations irrégulières de courte durée de l'écoulement du frigorigène, afin d'on puisse exclure les valeurs des divergences trop petites.

6. Procédé selon spécification 1 ou 2 caractérisé de manière à ce que les différences du signal utile et/ou de la valeur de mesure utile par rapport à une fonction de référence, modifiable dans le temps, servent de paramètres aux oscillations irrégulières de courte durée de l'écoulement du frigorigène pour la détermination d'un taux de fluctuation.

7. Procédé selon spécification 6 caractérisé de manière à calculer la fonction de référence par rapport aux minima du signal utile et/ou de la valeur de mesure utile, déterminé pour des intervalles de temps d'une longueur appropriée.

8. Procédé selon spécification 6 caractérisé de manière à calculer la fonction de référence par rapport aux valeurs moyennes du signal utile et/ou de la valeur de mesure utile, déterminées pour des intervalles de temps d'une longueur appropriée.

9. Procédé selon une ou plusieurs spécifications ci-dessus caractérisé de manière à déterminer un taux de fluctuation basé sur une moyenne des valeurs de référence ou un autre mode de calcul.

10. Procédé selon une ou plusieurs spécifications ci-dessus caractérisé de manière à déterminer une valeur de référence basée sur la valeur moyenne des valeurs de mesure utiles ou une autre valeur représentant une fonction de la valeur de mesure utile en sachant que le taux de fluctuation est une fonction de cette valeur d'appréciation et que la valeur de référence sert à l'appréciation du degré de remplissage de l'évaporateur.

11. Procédé selon une ou plusieurs spécifications ci-dessus caractérisé de manière à déterminer la valeur de référence et une bande de tolérance respective pour le taux de fluctuation d'après une méthode expérimentale et de le représenter par des fonctions d'approximation, dont les variables - également nommées valeurs de référence dans ce cas - seraient par exemple les paramètres se rapportant à la technique des fluides de la soupape de détente.

12. Procédé selon une des spécifications de 1 à 8 ou selon spécification 10 caractérisé de manière à ce que le signal de mesure du débitmètre (10) comme valeur de mesure utile détermine la densité d'écoulement de masse en phase gazeuse du frigorigène dans la conduite d'aspiration (9) et sert également de référence à d'autres examens.

13. Machine frigorifique avec un dispositif de mesure pour l'enregistrement d'oscillations de courte durée de l'écoulement du fluide frigorigène (5) dans la conduite d'aspiration pour le réglage du degré de remplissage de l'évaporateur de la machine frigorifique dans un circuit de frigorigène fermé comprenant un compresseur (11) pour la condensation du frigorigène dans un condensateur (2) générant un courant de masse du frigorigène à la pression élevée, une soupape d'étranglement (3) pour l'adaptation et l'alimentation en pression réduite du courant de masse du frigorigène vers un évaporateur frigorigène (4) et une conduite (9) entre la sortie de l'évaporateur au frigorigène (4) et le compresseur (11) servant à l'aspiration d'un gaz pauvre par le compresseur (11), en sachant que la machine est équipée d'un anémomètre thermique (10) intégré à l'écoulement du fluide de la conduite d'aspiration (9) et que l'anémomètre (10) dispose d'une résistance de précision (7) et d'un capteur (8) de la température du gaz pauvre non chauffé.

14. Equipement selon spécification 13 caractérisé de manière à ce l'anémomètre thermique est composé d'une résistance de précision (7) avec élévation de la température à constante de temps et d'une sonde pyrométrique (8) non chauffée.

15. Equipement selon spécification 13 caractérisé de manière à ce l'anémomètre thermique est composé d'une résistance de précision (7) à puissance électrique chauffée en permanence et d'une sonde pyrométrique (8) non chauffée.
